# EUROPEAN PATENT SPECIFICATION

(11) **EP 4 332 669 B1**
(45) Date of publication and mention of the grant of the patent: **20.08.2025**
(21) Application number: 22794763.7
(22) Date of filing: 22.04.2022
(51) Int. Cl.: G02F 1/133, G02F 1/1335, H04N 23/63, G02F 1/137, G02F 1/1333

(54) **DISPLAY MODULE, ELECTRONIC APPARATUS, PHOTOGRAPHY CONTROL METHOD, AND PHOTOGRAPHY CONTROL DEVICE**
ANZEIGEMODUL, ELEKTRONISCHE VORRICHTUNG, FOTOGRAFIESTEUERUNGSVERFAHREN UND FOTOGRAFIESTEUERUNGSVORRICHTUNG
MODULE D'AFFICHAGE, APPAREIL ÉLECTRONIQUE, PROCÉDÉ DE COMMANDE DE PHOTOGRAPHIE ET DISPOSITIF DE COMMANDE DE PHOTOGRAPHIE

(30) Priority: 28.04.2021 CN 202110470029
(43) Date of publication of application: 06.03.2024
(73) Proprietor: VIVO MOBILE COMMUNICATION CO., LTD., Dongguan, Guangdong 523863 (CN)
(72) Inventor: YANG, Wenqiang, Hangzhou, Zhejiang 311121 (CN); WU, Junwei, Hangzhou, Zhejiang 311121 (CN)
(74) Representative: Petraz, Gilberto Luigi
(86) International application number: PCT/CN2022/088385
(87) International publication number: WO 2022/228292

(56) References cited:
- CN-A- 103 314 326
- CN-A- 109 283 736
- CN-A- 110 187 559
- CN-A- 110 501 828
- CN-A- 110 568 643
- CN-A- 110 673 369
- CN-A- 112 313 567
- CN-A- 113 189 805
- CN-U- 210 428 021
- JP-A- 2012 128 457
- US-A- 4 774 537

## Description

### TECHNICAL FIELD

The present application belongs to the technical field of electronic products, in particular to a display module, an electronic device, a photography control method, and a photography control apparatus.

### BACKGROUND

At present, an aperture of a camera of a smart phone is fixed. Regardless of a photography scene, the aperture is fixed and cannot be adjusted. As a result, the photography imaging effect of the smart phone is single, the color is not bright enough, and the user experience is reduced. Further, a variable aperture is designed with a lens in the related art, and is mainly used for a professional camera, such as a single-lens reflex camera or a miniature single-lens reflex camera. The aperture has a mechanical structure, which requires a motor to drive the aperture to change or control the aperture by manual control. The aperture is not only large in size, but also complex in driving, which cannot be applied to smart phones with limited space. CN 109 283 736 A discloses an electronic apparatus comprising a camera; a first polarization plate; a second polarization plate; a liquid crystal panel that is positioned between the first and second polarization plates; and a controller that controls the liquid crystal panel, wherein the liquid crystal panel has first and second regions superimposed on the camera, and the controller controls a first opening mode in which light is transmitted through the first and second regions, and a second opening mode in which the amount of light transmitted through the first region is set lesser than the amount of light transmitted through the second region.

### SUMMARY

Embodiments of the present application aim to provide a display module, an electronic device, a photography control method, and a photography control apparatus, which can solve the technical problem that the size of an aperture is unadjustable when a mobile phone is used for photographing in the related art.

To solve the foregoing technical problem, the present application is implemented as follows.

In a first aspect of the present application, a display module is provided, including a first polarizer, a color film layer, a substrate, a second polarizer, and a backlight module, which are stacked in sequence. The first polarizer is provided with a first light-transmitting hole penetrating in a thickness direction thereof. The color film layer is provided with a light-transmitting region. The light-transmitting region corresponds to the position of the first light-transmitting hole. A control electrode is provided in the light-transmitting region. The substrate is provided with a liquid crystal display region and an aperture adjustment region. The position of the aperture adjustment region corresponds to the position of the first light-transmitting hole. The liquid crystal display region is spaced apart from the aperture adjustment region. The aperture adjustment region is filled with guest host liquid crystals. A material of liquid crystals located in the liquid crystal display region is different from a material of liquid crystals located in the aperture adjustment region. The substrate has a driving circuit. The driving circuit drives the guest host liquid crystals to deflect so as to adjust an aperture.

In a second aspect of the present application, an electronic device is provided, including: a display module in the foregoing embodiments; and a camera module provided on the side of the display module close to a backlight module, a viewfinder window of the camera module corresponding to an aperture adjustment region of the display module, so as to photograph according to an aperture adjusted by the aperture adjustment region.

In a third aspect of the present application, a photography control method is provided, which is applied to the electronic device in the foregoing embodiments. The method includes: acquiring an aperture adjustment instruction; adjusting an aperture adjustment region according to the aperture adjustment instruction to obtain a target aperture; and photographing according to the target aperture.

In a fourth aspect of the present application, a photography control apparatus is provided, which is applied to the electronic device in the foregoing embodiments. The control apparatus includes: an acquisition module, configured to acquire an aperture adjustment instruction; an adjustment module, configured to adjust an aperture adjustment region according to the aperture adjustment instruction to obtain a target aperture; and a photography module, connected to the adjustment module and configured to photograph according to the target aperture.

In the embodiments of the present application, an aperture adjustment region is filled with guest host liquid crystals different from a liquid crystal display region, a first light-transmitting hole is provided in a first polarizer, and light can be directly irradiated on the guest host liquid crystals. With the light valve characteristics of the guest host liquid crystals, a driving circuit and a control electrode can drive the guest host liquid crystals to deflect, thereby realizing the automatic adjustment of an aperture and effectively improving the photography experience of users.

The additional aspects and advantages of the present invention will be set forth in part in the description below, parts of which will become apparent from the description below, or will be understood by the practice of the present invention.

### BRIEF DESCRIPTION OF THE DRAWINGS

The foregoing and/or additional aspects and advantages of the present invention will become apparent and more readily appreciated from the following descriptions of the embodiments made with reference to the drawings.
FIG. 1 is an exploded view of a display module according to an embodiment of the present invention.
FIG. 2 is a top view of a color film layer of a display module according to an embodiment of the present invention.
FIG. 3 is a top view of a substrate of a display module according to an embodiment of the present invention.
FIG. 4 is a flowchart of a photography control method according to an embodiment of the present invention.

Reference Numerals:
display module 100;
first polarizer 10; first light-transmitting hole 11;
color film layer 20; control electrode 21; electrode driving wire 22;
substrate 30; aperture adjustment region 31; liquid crystal retaining wall 32; liquid crystal display region 33; conductive column 342; display driving chip 341;
second polarizer 40; second light-transmitting hole 41;
backlight module 50; third light-transmitting hole 51;
camera module 200.

### DETAILED DESCRIPTION

Detail description of the embodiments of the present invention will be made in the following, and examples thereof are illustrated in the drawings, throughout which identical or similar elements or elements of identical or similar functions are represented with identical or similar reference numerals. The embodiments that are described with reference to the accompanying drawings are exemplary, and are only used to interpret the present invention, instead limiting the present invention.

Features limited by the terms "first" and "second" in the specification and claims of the present application may expressly or implicitly include one or more such features. In the description of the present invention, unless stated otherwise, the meaning of "a plurality of" is two or more than two. In addition, "and/or" in the specification and claims represents at least one of the connected objects, and the character "/" generally represents that the associated objects are in an "or" relationship.

In the description of the present invention, it is to be understood that orientation or position relationships indicated by the terms such as "center", "longitudinal", "transverse", "length", "width", "thickness", "on", "below", "front", "back", "left", "right", "vertical", "horizontal", "top", "bottom", "inside", "outside", "clockwise", "anticlockwise", "axial", "radial", and "circumferential" are based on orientation or position relationships shown in the accompanying drawings, and are used only for ease and brevity of illustration and description, rather than indicating or implying that the mentioned apparatus or component must have a particular orientation or must be constructed and operated in a particular orientation. Therefore, such terms should not be construed as limiting of the present invention.

In the description of the present invention, it is to be noted that unless otherwise explicitly specified or defined, the terms such as "mount", "connect", and "connection" should be understood in a broad sense. For example, the connection may be a fixed connection, a detachable connection, or an integral connection; or the connection may be a mechanical connection or an electrical connection; or the connection may be a direct connection, an indirect connection through an intermediary, or internal communication between two components. A person of ordinary skill in the art may understand the specific meanings of the foregoing terms in the present invention according to specific situations.

A display module 100 according to an embodiment of the present application will be described in detail with reference to the accompanying drawings through specific embodiments and application scenarios thereof.

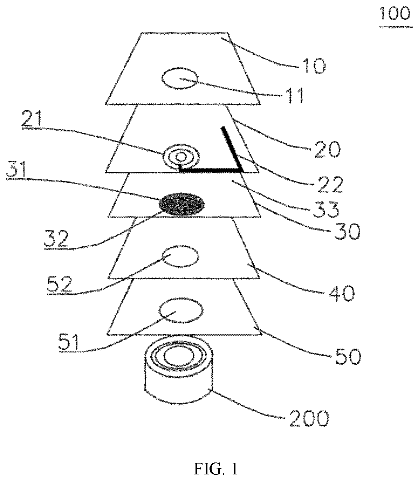

As shown in FIG. 1 to FIG. 3, the display module 100 according to this embodiment of the present application includes a first polarizer 10, a color film layer 20, a substrate 30, a second polarizer 40, and a backlight module 50, which are stacked in sequence.

Specifically, the first polarizer 10 is provided with a first light-transmitting hole 11 penetrating in a thickness direction thereof. The color film layer 20 is provided with a light-transmitting region in positional correspondence with the first light-transmitting hole 11. A control electrode 21 is provided in the light-transmitting region. The substrate 30 is provided with a liquid crystal display region 33 and an aperture adjustment region 31. The position of the aperture adjustment region 31 corresponds to the position of the first light-transmitting hole 11. The liquid crystal display region 33 is spaced apart from the aperture adjustment region 31. The aperture adjustment region 31 is filled with guest host liquid crystals. A material of liquid crystals located in the liquid crystal display region 33 is different from a material of liquid crystals located in the aperture adjustment region 31. The substrate 30 has a driving circuit. The driving circuit is connected to the control electrode 21. The driving circuit drives the guest host liquid crystals to deflect so as to adjust an aperture.

In other words, as shown in FIG. 1, the display module 100 according to this embodiment of the present application mainly includes a first polarizer 10, a color film layer 20, a substrate 30, a second polarizer 40, and a backlight module 50. The first polarizer 10, the color film layer 20, the substrate 30, the second polarizer 40, and the backlight module 50 are stacked in sequence. The first polarizer 10 is provided with a first light-transmitting hole 11. The first light-transmitting hole 11 penetrates in a thickness direction of the first polarizer 10. Light can directly enter the color film layer 20 through the first light-transmitting hole 11, thereby effectively reducing the attenuation of the light and improving the light transmittance. The color film layer 20 is provided with a light-transmitting region. The light-transmitting region corresponds to the position of the first light-transmitting hole 11. A control electrode 21 is provided in the light-transmitting region. A liquid crystal display region 33 and an aperture adjustment region 31 are spaced apart on the substrate 30. The position where the aperture adjustment region 31 is provided corresponds to the position where the first light-transmitting hole 11 is provided and the position where the light-transmitting region is provided.

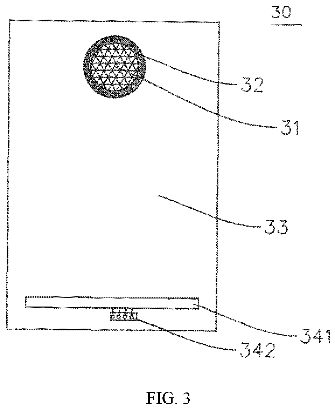

As shown in FIG. 3, the aperture adjustment region 31 is filled with guest host liquid crystals (GH-LCD). A material of liquid crystals located in the liquid crystal display region 33 is different from a material of liquid crystals located in the aperture adjustment region 31. The guest host liquid crystals and the liquid crystal display region 33 are on the same layer and share a driving circuit of a liquid crystal panel to realize aperture control. Certainly, in the present application, other types of liquid crystals capable of realizing similar principles of the guest host liquid crystal also fall within the scope of protection of the present application and are not specifically limited in the present application. A driving circuit is provided on the substrate 30. The driving circuit can be connected to the control electrode 21 of the color film layer 20. The driving circuit can transmit a driving signal to the control electrode 21. After receiving the driving signal, the control electrode 21 can release a charge-discharge voltage corresponding to the driving signal to drive the guest host liquid crystals to deflect.

Light is transmitted from the first light-transmitting hole 11 and the light-transmitting region to the aperture adjustment region 31 in sequence. Different driving signals are emitted by the driving circuit. The control electrode 21 can release different charge-discharge voltages. The guest host liquid crystals at different positions in the aperture adjustment region 31 may be deflected differently to change the light transmittance, thereby realizing the automatic adjustment of the aperture. It will be understood by a person skilled in the art that the second polarizer 40 is provided with a second light-transmitting hole 41 penetrating in a thickness direction thereof. The backlight module 50 is provided with a third light-transmitting hole 51 penetrating in a thickness direction thereof, and the third light-transmitting hole 51 is coaxial with the first light-transmitting hole 11 and the second light-transmitting hole 41. A backlight side of the backlight module 50 faces the camera module 200, and the third light-transmitting hole 51 corresponds to the camera module 200. Light is transmitted into the camera module 200 from the first light-transmitting hole 11, the light-transmitting region, the aperture adjustment region 31, the second light-transmitting hole 41, and the third light-transmitting hole 51 in sequence. The guest host liquid crystals at different positions may be deflected differently to change the light transmittance, thereby realizing the automatic adjustment of the aperture.

It is to be noted that the aperture is an apparatus for controlling the amount of light passing through and entering a photosensitive surface of a body, which is usually provided in a lens. Usually, the size of the aperture is represented by F, and the formula for calculating the size of the aperture is: F = focal length of lens / effective aperture of lens. From different photography scenes, different photography experiences may be obtained by using different values of F. However, it is impossible to change the diameter of the lens at will for the manufactured lens, but the effect of controlling the light throughput of the lens can be achieved by adding a polygonal or circular aperture grating with variable area inside the lens. When photographing, a large aperture may be used for portrait photography, thus achieving a good background blurring effect. When making a long shot, the aperture can be reduced to achieve wide angle, large depth of field, clear foreground and background.

As will be known to a person skilled in the art, a guest host effect is to dissolve a dichroic dye with different absorption of visible light in a major axis direction and a minor axis direction as a guest in a liquid crystal host aligned directionally. The dichroic dye will be aligned with liquid crystal molecules in the same direction accordingly. When the alignment of the liquid crystal molecules as the host changes under the action of an electric field, the alignment direction of dichroic dye molecules will also change. That is, the absorption of the dichroic dye to incident light will also change. The display module 100 of the present application emits different driving signals to the control electrode 21 through the driving circuit. After receiving the different driving signals, the control electrode 21 can release charge-discharge voltages corresponding to the driving signals to drive the deflection of the guest host liquid crystals at different positions, so as to change the light transmittance.

In the related art, although the light transmittance is also improved by digging holes in polarizing regions corresponding to the first polarizer 10 and the second polarizer 40, only when the liquid crystal display region 33 and the aperture adjustment region are made of common liquid crystal materials, it is necessary to add upper and lower polarizers in polarizing directions perpendicular to each other on an aperture region to realize optical path control. However, the transmittance of each polarizer will be reduced by 50%, and the light transmittance is greatly limited. Therefore, it is impossible to automatically control the aperture and make the imaging clearer. The aperture adjustment region 31 of the display module 100 of the present application uses the guest host liquid crystal. Since the liquid crystal display has a special light valve property, the light valve effect can be achieved without a polarizer.

In the display module 100 of the present application, the aperture adjustment region 31 is inserted into the normal liquid crystal display region 33, and the aperture adjustment region 31 is filled with the guest host liquid crystals. By driving the deflection of the guest host liquid crystals at different positions, the light transmittance is changed, and the effect of a physical aperture is achieved. Compared with the physical aperture, the aperture of the present application not only has a smaller volume and can be provided in some electronic products with smaller accommodating space, but also is simpler and more intelligent to adjust than traditional mechanical aperture adjustment, which is convenient for users to operate.

The display module 100 of the present application may be applied to a camera of a mobile phone, the aperture of the camera of the mobile phone is adjustable, and multiple frames of images may be obtained as original image data during photography. The focal length corresponding to different aperture values changes, and different details of the same picture (adjust the depth of field) may be acquired. Further, with a digital image processing technology, images with clear edges and bright colors can be obtained, thus effectively improving the photography experience of mobile phone users.

Therefore, the aperture adjustment region 31 is filled with guest host liquid crystals, the first light-transmitting hole 11 is provided in the first polarizer 10, and light can be directly irradiated on the guest host liquid crystals. With the light valve characteristics of the guest host liquid crystals, the driving circuit and the control electrode 21 can drive the guest host liquid crystals at different positions to deflect, thereby changing the transmittance of light entering the camera module. The display module 100 of the present application can achieve the effect of variable aperture while ensuring the light transmittance, and has the advantages of small aperture volume and high aperture adjustability. During photography, the display module 100 of the present application can acquire different details of the same picture by adjusting the aperture. With a digital image processing technology, images with clear edges and bright colors can be obtained, thus effectively improving the photography experience of users.

According to one embodiment of the present invention, an orthographic projection area of the aperture adjustment region 31 on the substrate 30 is not smaller than an orthographic projection area of the first light-transmitting hole 11 in the substrate 30.

That is, as shown in FIG. 1, the region where the aperture adjustment region 31 is provided on the substrate 30 corresponds to the position where the first light-transmitting hole 11 is provided in the first polarizer 10. The orthographic projection area of the aperture adjustment region 31 on the substrate 30 may be equal to or greater than the orthographic projection area of the first light-transmitting hole 11 in the substrate 30, so as to ensure that light entering from the first light-transmitting hole 11 can be fully irradiated on the aperture adjustment region 31 without light wasting. The area of the first light-transmitting hole 11 needs to be smaller than or equal to the area of the light-transmitting region, the aperture adjustment region 31, the second light-transmitting hole 41, and the third light-transmitting hole 51. When light is transmitted into the camera module 200 from the first light-transmitting hole 11, the light-transmitting region, the aperture adjustment region 31, the second light-transmitting hole 41, and the third light-transmitting hole 51 in sequence, the guest host liquid crystals may be deflected differently to change the light transmittance of all light passing through the first light-transmitting hole 11, thereby realizing the automatic adjustment of the aperture.

In some specific implementations of the present invention, the display module 100 further includes a liquid crystal retaining wall 32. The liquid crystal retaining wall 32 is a closed annular retaining wall. The inside region defined by the liquid crystal retaining wall 32 is the aperture adjustment region 31. The region outside the liquid crystal retaining wall 32 is the liquid crystal display region 33. The liquid crystal display region 33 is separated from the aperture adjustment region 31 through the liquid crystal retaining wall 32.

That is, as shown in FIG. 3, the display module 100 is further provided with a liquid crystal retaining wall 32. The liquid crystal retaining wall 32 is a closed annular retaining wall. The liquid crystal retaining wall 32 is provided between the aperture adjustment region 31 and the liquid crystal display region 33. The aperture adjustment region 31 is located inside the liquid crystal retaining wall 32. The liquid crystal display region 33 is located outside the liquid crystal retaining wall 32. By providing the liquid crystal retaining wall 32 between the aperture adjustment region 31 and the liquid crystal display region 33, it is possible to separate the guest host liquid crystals located in the aperture adjustment region 31 from the liquid crystals located in the liquid crystal display region 33, thereby avoiding affecting the light transmittance to the aperture adjustment region 31.

According to one embodiment of the present invention, the guest host liquid crystals located in the liquid crystal retaining wall 32 is sealed with a sealant.

Specifically, as shown in FIG. 3, the guest host liquid crystals may be injected into the set aperture adjustment region 31 on the substrate 30, and then the guest host liquid crystals are sealed with a sealant. Finally, a display region liquid crystal is injected into the liquid crystal display region 33. By providing the guest host liquid crystals and the display region liquid crystals in stages, the aperture adjustment region 31 and the liquid crystal display region 33 can be separated, and the guest host liquid crystals and the liquid crystal of the liquid crystal display region 33 can be encapsulated in the same layer.

In some specific implementations of the present invention, the control electrode 21 is connected to the driving circuit through an electrode driving wire 22.

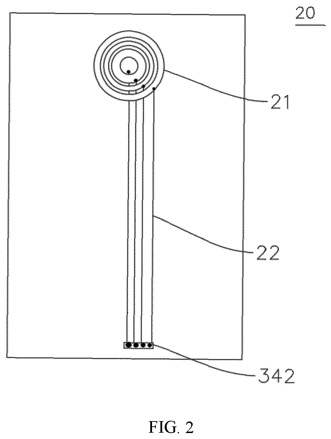

That is, as shown in FIG. 2, the control electrode 21 and the driving circuit are connected through the electrode driving wire 22. A driving signal emitted by the driving circuit is transmitted to the control electrode 21 through the electrode driving wire 22.

According to one embodiment of the present invention, the control electrode 21 includes a plurality of aperture electrodes and electrode driving wires spaced apart. Each aperture electrode is connected to the driving circuit through the corresponding electrode driving wire 22, so as to drive at least one aperture electrode to release a corresponding charge-discharge voltage.

That is, as shown in FIG. 2, the control electrode 21 includes a plurality of aperture electrodes. The plurality of aperture electrodes are spaced apart in the light-transmitting region. A plurality of electrode driving wires 22 are provided corresponding to the plurality of aperture electrodes. Each aperture electrode is independently connected to the driving circuit through one of the electrode driving wires 22. The driving circuit can control each aperture electrode to release the corresponding charge-discharge voltage, whereby electric fields at different positions in the aperture adjustment region 31 change, so as to adjust the deflection of the guest host liquid crystals at different positions in the aperture adjustment region 31 and realize the adjustment of light transmittance.

In some specific implementations of the present invention, each aperture electrode is a closed-loop electrode, and the plurality of aperture electrodes are disposed coaxially.

Specifically, as shown in FIG. 2, each aperture electrode may be a closed-loop electrode, and the shape of the aperture electrode may be a closed pattern such as circle, square, or an irregular shape. The shapes of the plurality of aperture electrodes may be shapes corresponding to the first light-transmitting hole 11 and the light-transmitting region. Each aperture electrode is controllable independently, and each aperture electrode may be independently charged and discharged. The guest host liquid crystals located in the aperture adjustment region 31 may form a guest host liquid crystal change region with a corresponding shape according to the shape of the aperture electrode. The plurality of aperture electrodes are disposed coaxially and at intervals. When the aperture electrodes are circular, the plurality of aperture electrodes are disposed coaxially. By adjusting different aperture electrodes, the guest host liquid crystals in different regions are deflected to change the light transmittance and realize the adjustment of the aperture. The aperture electrode may also be adjusted by different arrangements and combinations, whereby the guest host liquid crystal in the corresponding annular region is deflected, and the effect of the annular aperture can be achieved. That is, by changing the shape of the aperture electrode, light with different shapes and areas may pass, thus achieving a certain filter effect.

According to one embodiment of the present invention, each aperture electrode is an indium tin oxide electrode. Indium tin oxide is a transparent conductor, which can be used in a coating process. The conductive electrode function of the aperture electrode can be realized, and light will not be blocked. The light can enter the aperture adjustment region 31 from the light-transmitting region.

In some specific implementations of the present invention, the driving circuit includes a plurality of conductive columns 342 and a display driving chip 341. The plurality of conductive columns 342 are provided on the substrate 30 and spaced apart from the aperture adjustment region 31. Each electrode driving wire 22 is connected to the corresponding conductive column 342. The display driving chip 341 is provided on the substrate 30 and close to the side of the plurality of conductive columns 342 facing the aperture adjustment region 31. Each electrode driving wire 22 is connected to the display driving chip 341 through the corresponding conductive column 342.

That is, as shown in FIG. 3, the driving circuit mainly includes the plurality of conductive columns 342 and the display driving chip 341. The conductive columns 342 may be anisotropic conductive columns 342, and the plurality of conductive columns 342 and the display driving chip 341 are provided on the substrate 30 at intervals. The display driving chip 341 is located between the plurality of conductive columns 342 and the aperture adjustment region 31. The aperture adjustment region 31 is spaced apart from the plurality of conductive columns 342. Each electrode driving wire 22 is connected to the corresponding conductive column 342 across layers from the color film layer 20 to the substrate 30. Each conductive column 342 is connected to the display driving chip 341.

In a word, the first light-transmitting hole 11 and the second light-transmitting hole 41 are provided in the first polarizer 10 and the second polarizer of the display module 100 according to this embodiment of the present invention, thus improving the light transmittance. The aperture adjustment region 31 is filled with the guest host liquid crystals, and the guest host liquid crystals at different positions can be driven to deflect through the driving circuit and the plurality of aperture electrodes by utilizing the characteristics of the guest host liquid crystals. The display module 100 of the present application can achieve a variable aperture while ensuring the light transmittance, and achieve the same effect as the physical aperture. The display module 100 of the present application can acquire different details of the same picture by adjusting the aperture. With a digital image processing technology, images with clear edges and bright colors can be obtained. Different filter effects can be achieved by providing aperture electrodes with different shapes and adjusting the aperture, thus effectively improving the photography experience of users.

In a second aspect of the present application, an electronic device is provided. The electronic device according to this embodiment of the present invention includes a display module 100 and a camera module 200 in the foregoing embodiment. The camera module 200 is provided on the side of the display module 100 close to a backlight module 50, and a viewfinder window of the camera module 200 corresponds to an aperture adjustment region 31 of the display module 100, so as to photograph according to an aperture adjusted by the aperture adjustment region 31.

That is, the camera module 200 is provided on the backlight module 50 of the display module 100, and the camera module 200 has a viewfinder window. That is, the display module 100 is located on a light-entering side of the camera module 200. The position where the viewfinder window is provided corresponds to the position where the aperture adjustment region 31 of the display module 100 is provided. By adjusting the aperture adjustment region 31, the amount of light finally reached in the camera module 200 can be controlled.

Specifically, the display module 100 mainly includes a first polarizer 10, a color film layer 20, a substrate 30, a second polarizer 40, and a backlight module 50. The first polarizer 10, the color film layer 20, the substrate 30, the second polarizer 40, and the backlight module 50 are stacked in sequence. The first polarizer 10 is provided with a first light-transmitting hole 11. The first light-transmitting hole 11 penetrates in a thickness direction of the first polarizer 10. Light can directly enter the color film layer 20 through the first light-transmitting hole 11, thereby effectively reducing the attenuation of the light and improving the light transmittance. The color film layer 20 is provided with a light-transmitting region. The light-transmitting region is in positional correspondence with the first light-transmitting hole 11. A control electrode 21 is provided in the light-transmitting region.

A liquid crystal display region 33 and an aperture adjustment region 31 are spaced apart on the substrate 30. The position where the aperture adjustment region 31 is provided corresponds to the position where the first light-transmitting hole 11 is provided and the position where the light-transmitting region is provided. The second polarizer 40 is provided with a second light-transmitting hole 41 penetrating in a thickness direction thereof. The backlight module 50 is provided with a third light-transmitting hole 51 penetrating in a thickness direction thereof, and the third light-transmitting hole 51 is coaxial with the first light-transmitting hole 11 and the second light-transmitting hole 41. A backlight side of the backlight module 50 faces the camera module 200, and the third light-transmitting hole 51 corresponds to the camera module 200.

In the present application, the aperture adjustment region 31 is inserted into the normal liquid crystal display region 33, and the aperture adjustment region 31 is filled with the guest host liquid crystals. By driving the deflection of the guest host liquid crystals at different positions, the light transmittance is changed, and the effect of a physical aperture is achieved. Light is transmitted into the camera module 200 from the first light-transmitting hole 11, the light-transmitting region, the aperture adjustment region 31, the second light-transmitting hole 41, and the third light-transmitting hole 51 in sequence. The driving circuit can control each aperture electrode to release the corresponding charge-discharge voltage, whereby electric fields at different positions in the aperture adjustment region 31 change, so as to adjust the deflection of the guest host liquid crystals at different positions in the aperture adjustment region 31. The guest host liquid crystals at different positions are deflected differently to change the light transmittance, thereby realizing the automatic adjustment of the aperture.

The viewfinder window of the camera module 200 corresponds to the aperture adjustment region 31 of the display module 100. By adjusting the aperture adjustment region 31, the amount of light finally reached in the camera module 200 can be controlled. Then the camera module 200 acquires different details of the same picture according to actual photography requirements based on focal lengths corresponding to different aperture values of the adjusted aperture to obtain images with bright colors, thus effectively improving the photography experience of users.

In some specific implementations of the present application, the orthographic projection area of the aperture adjustment region 31 on the camera module 200 is not smaller than the area of the viewfinder window of the camera module 200.

As shown in FIG. 1, the region where the aperture adjustment region 31 is provided on the substrate 30 corresponds to the position where the viewfinder window of the camera module 200 is provided. The orthographic projection area of the aperture adjustment region 31 on the camera module 200 may be equal to or greater than the area of the viewfinder window of the camera module 200, so as to ensure that all the scenes acquired by the viewfinder window of the camera module 200 can be adjusted through the aperture adjustment region 31. In addition, the orthographic projection area of the aperture adjustment region 31 on the substrate 30 may be equal to or greater than the orthographic projection area of the first light-transmitting hole 11 in the substrate 30, so as to ensure that light entering from the first light-transmitting hole 11 can be fully irradiated on the aperture adjustment region 31.

When light is transmitted into the viewfinder window of the camera module 200 from the first light-transmitting hole 11, the light-transmitting region, the aperture adjustment region 31, the second light-transmitting hole 41, and the third light-transmitting hole 51 in sequence, the guest host liquid crystals may be deflected differently to change the light transmittance of all light passing through the first light-transmitting hole 11. The light transmitted into the viewfinder window of the camera module 200 may be fully adjusted through the aperture adjustment region 31, thereby realizing the automatic adjustment of the aperture and ensuring the range of aperture adjustment.

Therefore, with the display module 100, the camera module 200 of the electronic device of the present application may acquire different details of the same picture according to focal lengths corresponding to different aperture values of the adjusted aperture to obtain images with bright colors, thus effectively improving the photography experience of users.

In a third aspect of the present application, a photography control method is provided. The photography control method according to this embodiment of the present invention includes the following steps.
S1: Acquire an aperture adjustment instruction.
S2: Adjust an aperture adjustment region according to the aperture adjustment instruction to obtain a target aperture.
S3: Photograph according to the target aperture.

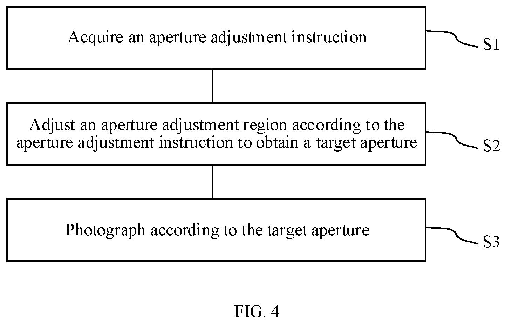

Specifically, as shown in FIG. 4, in the photography control method according to this embodiment of the present invention, the electronic device first acquires an aperture adjustment instruction. The aperture adjustment instruction may be understood as an adjustment signal or an adjustment operation of a user. Then, according to the aperture adjustment instruction, the display driving chip 341 transmits a driving signal to the control electrode 21 via the conductive column 342 and the electrode driving wire 22. The control electrode 21 receives the driving signal and releases a target voltage to drive the guest host liquid crystal located in the corresponding region to deflect at a certain angle, thereby realizing the adjustment of the aperture adjustment region 31 and obtaining the target aperture.

The control electrode 21 may be a plurality of aperture electrodes. When the aperture electrodes are circular, the plurality of aperture electrodes are disposed coaxially. According to a specific aperture adjustment instruction, a corresponding driving signal can be formed to adjust the corresponding aperture electrode, and the corresponding aperture electrode releases a corresponding charge-discharge voltage, whereby the guest host liquid crystal located in the corresponding region is deflected. Moreover, the guest host liquid crystal can be deflected at an angle according to different voltages, so as to adjust the aperture adjustment region 31 and obtain the corresponding target aperture. In the present application, the aperture electrode may be adjusted according to different arrangements and combinations, whereby the guest host liquid crystal in the corresponding annular region is deflected, and the effect of the annular aperture can be achieved. Certainly, by changing the shape of the aperture electrode, light with different shapes and areas may pass, thus achieving a certain filter effect.

Finally, by adjusting the aperture adjustment region 31, the electronic device can acquire multiple frames of images as original image data, and obtain corresponding target images from the original image data according to aperture values corresponding to different target apertures. The focal length corresponding to different aperture values changes, and different details of the same picture (adjust the depth of field) may be acquired. Further, with a digital image processing technology, images with clear edges and bright colors can be obtained, thus effectively improving the photography experience of mobile phone users.

According to one embodiment of the present invention, the operation of adjusting an aperture adjustment region according to the aperture adjustment instruction to obtain a target aperture includes: determining an aperture region of the aperture adjustment region according to the aperture adjustment instruction; and controlling the deflection of a guest host liquid crystal corresponding to the aperture region to obtain the target aperture.

In some specific implementations of the present invention, the operation of controlling the deflection of a guest host liquid crystal corresponding to the aperture region to obtain the target aperture includes: applying a target voltage to the aperture region; and driving, according to the target voltage, the guest host liquid crystal to deflect by a target angle to obtain the target aperture. That is, when the control electrode 21 receives the driving signal, the target voltage can be applied to the corresponding aperture region, whereby the guest host liquid crystal in the corresponding region is deflected at a certain angle to obtain a target light transmittance, and light is transmitted into the viewfinder window of the camera module 200, thereby obtaining an image under the target aperture.

During the photography of the camera module 200, the aperture adjustment region 31 is adjusted according to the aperture adjustment instruction to obtain the target aperture, and the camera module 200 can acquire multiple frames of images as original image data according to the target aperture. Each target aperture will correspond to the corresponding aperture value, which may be found from the original image data. Further, with a digital image processing technology, images with clear edges and bright colors can be obtained, thus effectively improving the photography experience of mobile phone users.

Therefore, in the photography control method according to this embodiment of the present invention, the camera module 200 can acquire different details of the same picture by adjusting the aperture. With a digital image processing technology, images with clear edges and bright colors can be obtained. It is also possible to provide aperture electrodes with different shapes and sizes, and the aperture electrodes drive the deflection of the guest host liquid crystals at different positions. Different filter effects can be achieved, thus effectively improving the photography experience of users.

In a fourth aspect of the present application, a photography control apparatus is provided. The photography control apparatus according to this embodiment of the present invention includes an acquisition module, an adjustment module, and a photography module. The acquisition module is configured to acquire an aperture adjustment instruction. The adjustment module is configured to adjust an aperture adjustment region according to the aperture adjustment instruction to obtain a target aperture. The photography module is connected to the adjustment module. The photography module is configured to photograph according to the target aperture.

In other words, the photography control apparatus according to this embodiment of the present invention mainly includes an acquisition module, an adjustment module, and a photography module. The acquisition module can acquire an aperture adjustment instruction according to an adjustment signal or an adjustment operation of a user, and form a corresponding driving signal. The adjustment module can adjust the aperture adjustment region according to the corresponding driving signal to obtain a target aperture. The photography module is connected to the adjustment module. The photography module can photograph the target aperture according to the target aperture, so as to obtain a target image.

The photography control apparatus can acquire multiple frames of images as original image data by adjusting the aperture adjustment region 31 according to the corresponding driving signal through the adjustment module. Corresponding target images are obtained from the original image data according to aperture values corresponding to different target apertures. During the photography of the photography module, the focal length corresponding to different aperture values changes, and different details of the same picture (adjust the depth of field) may be acquired. Further, with a digital image processing technology, images with clear edges and bright colors can be obtained, thus effectively improving the photography experience of mobile phone users.

Specifically, the display driving chip 341 transmits a driving signal to the control electrode 21 via the conductive column 342 and the electrode driving wire 22. The control electrode 21 receives the driving signal of the driving circuit and releases a target voltage to drive the deflection of the guest host liquid crystal in the corresponding region at a certain angle. The adjusted light is transmitted to the viewfinder window of the camera module 200, and the target image can be obtained according to the target aperture during the photography of the camera module 200. By adjusting the aperture adjustment region 31, the electronic device can acquire multiple frames of images as original image data, and obtain corresponding target images from the original image data according to aperture values corresponding to different target apertures.

In some specific implementations of the present invention, the adjustment module includes a control unit and a driving unit. The control unit is configured to receive the aperture adjustment instruction and determine an aperture region of the aperture adjustment region 31 according to the aperture adjustment instruction. The driving unit is configured to drive the deflection of a guest host liquid crystal corresponding to the aperture region to obtain the target aperture.

That is, the adjustment module mainly includes a control unit and a driving unit. The control unit can receive the aperture adjustment instruction and transmit a driving signal. The control unit may be the display driving chip 341. The driving unit can receive the driving signal, and drive the guest host liquid crystal corresponding to the aperture adjustment region 31 to deflect to obtain the target aperture. The driving unit may be the control electrode 21. The control electrode 21 receives the driving signal of the driving circuit and releases a target voltage to drive the deflection of the guest host liquid crystal in the corresponding region at a certain angle.

The control electrode 21 may be a plurality of aperture electrodes. When the aperture electrodes are circular, the plurality of aperture electrodes are disposed coaxially. According to a specific adjustment instruction, a corresponding driving signal can be formed to adjust the corresponding aperture electrode, and the corresponding aperture electrode releases a corresponding charge-discharge voltage, whereby the guest host liquid crystal in the corresponding region is deflected. Moreover, the guest host liquid crystal can be deflected at different angles according to different voltages, so as to adjust the aperture adjustment region 31 to change the light transmittance, thus realizing the adjustment of the aperture to obtain the target aperture. The photography control apparatus may also adjust the aperture electrode by different arrangements and combinations according to the specific adjustment instruction, whereby the guest host liquid crystal in the corresponding annular region is deflected, and the effect of the annular aperture can be achieved. That is, by changing the shape of the aperture electrode, light with different shapes and areas may pass, thus achieving a certain filter effect.

In addition, the photography module includes an acquisition unit and a camera unit. The acquisition unit is configured to acquire multiple frames of images as original image data. The camera unit is connected to the acquisition unit and the adjustment module respectively. The camera unit is configured to obtain corresponding target images from the original image data according to aperture values corresponding to different target apertures.

Therefore, the acquisition module, the adjustment module, and the photography module of the photography control apparatus according to this embodiment of the present invention are matched to achieve the effect of variable aperture while ensuring the light transmittance. The apparatus has the advantages of small aperture volume and high aperture adjustability. During photography, the photography control apparatus of the present application realizes the automatic adjustment of the aperture through the adjustment module. The photography module can acquire different details of the same picture by adjusting the aperture. With a digital image processing technology, images with clear edges and bright colors can be obtained, thus effectively improving the photography experience of users.

In the description of this specification, the description of the reference terms such as "an embodiment", "some embodiments", "exemplary embodiments", "example", "specific example", or "some examples" means that the specific features, structures, materials or characteristics described with reference to the embodiment or example are included in at least one embodiment or example of the present invention. In this specification, exemplary descriptions of the foregoing terms do not necessarily refer to the same embodiment or example. In addition, the described specific features, structures, materials, or characteristics may be combined in a proper manner in any one or more of the embodiments or examples.

Although the embodiments of the present invention have been shown and described, a person of ordinary skill in the art may understand that various changes, modifications, replacements, and variations may be made to the embodiments,
the scope of the present invention is defined by the appended claims.

## Claims

1. A display module (100), comprising a first polarizer (10), a color film layer (20), a substrate (30), a second polarizer (40), and a backlight module (50), which are stacked in sequence, wherein
the first polarizer (10) is provided with a first light-transmitting hole (11) penetrating in a thickness direction thereof;
the color film layer (20) is provided with a light-transmitting region, the light-transmitting region corresponds to a position of the first light-transmitting hole (11), and a control electrode (21) is provided in the light-transmitting region;
the substrate (30) is provided with a liquid crystal display region (33) and an aperture adjustment region (31), a position of the aperture adjustment region (31) corresponds to the position of the first light-transmitting hole (11), the liquid crystal display region (33) is spaced apart from the aperture adjustment region (31), the aperture adjustment region (31) is filled with guest host liquid crystals, and a material of liquid crystals located in the liquid crystal display region (33) is different from a material of liquid crystals located in the aperture adjustment region (31); and
the substrate (30) has a driving circuit, the driving circuit is connected to the control electrode (21), and the driving circuit is adapted to drive the guest host liquid crystals to deflect so as to adjust an aperture.

2. The display module (100) according to claim 1, wherein an orthographic projection area of the aperture adjustment region (31) on the substrate (30) is not smaller than an orthographic projection area of the first light-transmitting hole (11) in the substrate (30).

3. The display module (100) according to claim 1, further comprising: a liquid crystal retaining wall (32), wherein the liquid crystal retaining wall (32) is a closed annular retaining wall, an inside region defined by the liquid crystal retaining wall (32) is the aperture adjustment region (31), a region outside the liquid crystal retaining wall (32) is the liquid crystal display region (33), and the liquid crystal display region (33) is separated from the aperture adjustment region (31) through the liquid crystal retaining wall (32).

4. The display module (100) according to claim 1, wherein the control electrode (21) comprises a plurality of aperture electrodes and electrode driving wires (22) spaced apart, and each of the aperture electrodes is connected to the driving circuit through the corresponding electrode driving wire (22).

5. The display module (100) according to claim 4, wherein each of the aperture electrodes is a closed-loop electrode, and the plurality of aperture electrodes are disposed coaxially.

6. The display module (100) according to claim 4, wherein the driving circuit comprises:
a plurality of conductive columns (342) provided on the substrate (30) and spaced apart from the aperture adjustment region (31), each of the electrode driving wires (22) being connected to a corresponding conductive column (342); and
a display driving chip (341) provided on the substrate (30) and close to a side of the plurality of conductive columns (342) facing the aperture adjustment region (31), each of the electrode driving wires (22) being connected to the display driving chip (341) through a corresponding conductive column (342).

7. An electronic device, comprising:
a display module (100) according to any one of claims 1-6; and
a camera module (200) provided on a side of the display module (100) close to a backlight module (50), a viewfinder window of the camera module (200) corresponding to an aperture adjustment region (31) of the display module (100), so as to photograph according to an aperture adjusted by the aperture adjustment region (31).

8. The electronic device according to claim 7, wherein an orthographic projection area of the aperture adjustment region (31) on the camera module (200) is not smaller than an area of the viewfinder window of the camera module (200).

9. A photography control method controlling the electronic device according to any one of claims 7-8, the method comprising:
acquiring (S1) an aperture adjustment instruction;
adjusting (S2) an aperture adjustment region (31) according to the aperture adjustment instruction to obtain a target aperture; and
photographing (S3) according to the target aperture.

10. The photography control method according to claim 9, wherein the adjusting an aperture adjustment region (31) according to the aperture adjustment instruction to obtain a target aperture comprises:
determining an aperture region of the aperture adjustment region (31) according to the aperture adjustment instruction; and
controlling the deflection of the guest host liquid crystal corresponding to the aperture region to obtain the target aperture.

11. The photography control method according to claim 10, wherein the controlling the deflection of the guest host liquid crystal corresponding to the aperture region to obtain the target aperture comprises:
applying a target voltage to the aperture region; and
driving, according to the target voltage, the guest host liquid crystal to deflect by a target angle to obtain the target aperture.

12. A photography control apparatus, comprising the electronic device according to any one of claims 7-8, the control apparatus further comprising:
an acquisition module, configured to acquire an aperture adjustment instruction;
an adjustment module, configured to adjust the aperture adjustment region (31) according to the aperture adjustment instruction to obtain a target aperture; and
a photography module, connected to the adjustment module and configured to photograph according to the target aperture.

13. The photography control apparatus according to claim 12, wherein the adjustment module comprises:
a control unit, configured to receive the aperture adjustment instruction and determine an aperture region of the aperture adjustment region (31) according to the aperture adjustment instruction; and
a driving unit, configured to drive the deflection of the guest host liquid crystal corresponding to the aperture region to obtain the target aperture.

## Patentansprüche

1. Anzeigemodul (100), umfassend einen ersten Polarisator (10), eine Farbfilmschicht (20), ein Substrat (30), einen zweiten Polarisator (40) und ein Hintergrundbeleuchtungsmodul (50), die der Reihe nach gestapelt sind, worin
der erste Polarisator (10) mit einem ersten lichtdurchlässigen Loch (11) versehen ist, das in einer Dickenrichtung davon durchdringt;
die Farbfilmschicht (20) mit einem lichtdurchlässigen Bereich versehen ist, der lichtdurchlässige Bereich einer Stellung des ersten lichtdurchlässigen Loches (11) entspricht, und eine Steuerungselektrode (21) im lichtdurchlässigen Bereich vorgesehen ist;
das Substrat (30) mit einem Flüssigkristallanzeigebereich (33) und einem Blendeneinstellungsbereich (31) versehen ist, eine Stellung des Blendeneinstellungsbereichs (31) der Stellung des ersten lichtdurchlässigen Loches (11) entspricht, der Flüssigkristallanzeigebereich (33) vom Blendeneinstellungsbereich (31) beabstandet ist, der Blendeneinstellungsbereich (31) mit Gast-Wirt-Flüssigkristallen gefüllt ist, und ein Material von Flüssigkristallen, die im Flüssigkristallanzeigebereich (33) gelegen sind, anders ist als ein Material von Flüssigkristallen, die im Blendeneinstellungsbereich (31) gelegen sind; und
das Substrat (30) eine Treiberschaltung hat, die Treiberschaltung mit der Steuerungselektrode (21) verbunden ist, und die Treiberschaltung dazu geeignet ist, die Gast-Wirt-Flüssigkristalle zur Ablenkung anzutreiben, um eine Blende einzustellen.

2. Anzeigemodul (100) nach Anspruch 1, worin eine orthographische Projektionsfläche des Blendeneinstellungsbereichs (31) am Substrat (30) nicht kleiner ist als eine orthographische Projektionsfläche des ersten lichtdurchlässigen Loches (11) im Substrat (30).

3. Anzeigemodul (100) nach Anspruch 1, ferner umfassend: eine Flüssigkristallhaltewand (32), worin die Flüssigkristallhaltewand (32) eine geschlossene ringförmige Haltewand ist, ein Innenbereich, der von der Flüssigkristallhaltewand (32) definiert ist, der Blendeneinstellungsbereich (31) ist, ein Bereich außerhalb der Flüssigkristallhaltewand (32) der Flüssigkristallanzeigebereich (33) ist, und der Flüssigkristallanzeigebereich (33) vom Blendeneinstellungsbereich (31) durch die Flüssigkristallhaltewand (32) getrennt ist.

4. Anzeigemodul (100) nach Anspruch 1, worin die Steuerungselektrode (21) eine Vielzahl von Blendenelektroden und Elektrodenantriebsdrähten (22) umfasst, die beabstandet sind, und jede von den Blendenelektroden mit der Treiberschaltung über den entsprechenden Elektrodenantriebsdraht (22) verbunden ist.

5. Anzeigemodul (100) nach Anspruch 4, worin jede von den Blendenelektroden eine Elektrode mit geschlossener Schleife ist, und die Vielzahl von Blendenelektroden koaxial angeordnet sind.

6. Anzeigemodul (100) nach Anspruch 4, worin die Treiberschaltung umfasst:
eine Vielzahl von leitfähigen Säulen (342), die am Substrat (30) vorgesehen und vom Blendeneinstellungsbereich (31) beabstandet sind, jeder von den Elektrodenantriebsdrähten (22) mit einer entsprechenden leitfähigen Säule (342) verbunden ist; und
einen Anzeigeantriebschip (341), der am Substrat (30) vorgesehen ist und einer Seite von der Vielzahl von leitfähigen Säulen (342) nahe ist, die dem Blendeneinstellungsbereich (31) zugewandt ist, jeder von den Elektrodenantriebsdrähten (22) mit dem Anzeigeantriebschip (341) über eine entsprechende leitfähige Säule (342) verbunden ist.

7. Elektronische Vorrichtung, umfassend:
ein Anzeigemodul (100) nach einem der Ansprüche 1-6; und
ein Kameramodul (200), das an einer Seite des Anzeigemoduls (100) vorgesehen ist, die einem Hintergrundbeleuchtungsmodul (50) nahe ist, ein Bildsucherfenster des Kameramoduls (200) einem Blendeneinstellungsbereich (31) des Anzeigemoduls (100) entspricht, um gemäß einer Blende zu fotografieren, die vom Blendeneinstellungsbereich (31) eingestellt ist.

8. Elektronische Vorrichtung nach Anspruch 7, worin eine orthographische Projektionsfläche des Blendeneinstellungsbereichs (31) am Kameramodul (200) nicht kleiner ist als eine Fläche des Bildsucherfensters des Kameramoduls (200).

9. Fotografiesteuerungsverfahren, das die elektronische Vorrichtung nach einem der Ansprüche 7-8 steuert, wobei das Verfahren umfasst:
Erfassen (S1) einer Blendeneinstellungsanweisung;
Einstellen (S2) eines Blendeneinstellungsbereichs (31) gemäß der Blendeneinstellungsanweisung, um eine Zielblende zu erhalten; und
Fotografieren (S3) gemäß der Zielblende.

10. Fotografiesteuerungsverfahren nach Anspruch 9, worin das Einstellen eines Blendeneinstellungsbereichs (31) gemäß der Blendeneinstellungsanweisung, um eine Zielblende zu erhalten, umfasst:
Bestimmen eines Blendenbereichs des Blendeneinstellungsbereichs (31) gemäß der Blendeneinstellungsanweisung; und
Steuern der Ablenkung des Gast-Wirt-Flüssigkristalls, der dem Blendenbereich entspricht, um die Zielblende zu erhalten.

11. Fotografiesteuerungsverfahren nach Anspruch 10, worin das Steuern der Ablenkung des Gast-Wirt-Flüssigkristalls, der dem Blendenbereich entspricht, um die Zielblende zu erhalten, umfasst:
Anwenden einer Zielspannung auf den Blendenbereich; und
Antreiben, gemäß der Zielspannung, des Gast-Wirt-Flüssigkristalls, damit er um einen Zielwinkel abgelenkt wird, um die Zielblende zu erhalten.

12. Fotografiesteuerungsvorrichtung, umfassend die elektronische Vorrichtung nach einem der Ansprüche 7-8, wobei die Steuerungsvorrichtung ferner umfasst:
ein Erwerbungsmodul, das dazu eingerichtet ist, eine Blendeneinstellungsanweisung zu erwerben;
ein Einstellungsmodul, das dazu eingerichtet ist, den Blendeneinstellungsbereich (31) gemäß der Blendeneinstellungsanweisung einzustellen, um eine Zielblende zu erhalten; und
ein Fotografiemodul, das mit dem Einstellungsmodul verbunden ist und dazu eingerichtet ist, gemäß der Zielblende zu fotografieren.

13. Fotografiesteuerungsvorrichtung nach Anspruch 12, worin das Einstellungsmodul umfasst:
eine Steuerungseinheit, die dazu eingerichtet ist, die Blendeneinstellungsanweisung zu empfangen und einen Blendenbereich des Blendeneinstellungsbereichs (31) gemäß der Blendeneinstellungsanweisung zu bestimmen; und
eine Antriebseinheit, die dazu eingerichtet ist, die Ablenkung des Gast-Wirt-Flüssigkristalls, der dem Blendenbereich entspricht, anzutreiben, um die Zielblende zu erhalten.

## Revendications

1. Module d'affichage (100), comprenant un premier polariseur (10), une couche de film coloré (20), un substrat (30), un second polariseur (40) et un module de rétroéclairage (50), qui sont empilés en séquence, dans lequel le premier polariseur (10) est doté d'un premier trou de transmission de lumière (11) pénétrant dans le sens de l'épaisseur de celui-ci ;
la couche de film coloré (20) est dotée d'une région de transmission de lumière, la région de transmission de lumière correspond à une position du premier trou de transmission de lumière (11), et une électrode de commande (21) est disposée dans la région de transmission de lumière ;
le substrat (30) est doté d'une région d'affichage à cristaux liquides (33) et d'une région de réglage d'ouverture (31), une position de la région de réglage d'ouverture (31) correspond à la position du premier trou de transmission de lumière (11), la région d'affichage à cristaux liquides (33) est espacée de la région de réglage d'ouverture (31), la région de réglage d'ouverture (31) est remplie de cristaux liquides de type invité-hôte, et un matériau de cristaux liquides situé dans la région d'affichage à cristaux liquides (33) est différent d'un matériau de cristaux liquides situé dans la région de réglage d'ouverture (31) ; et
le substrat (30) présente un circuit d'attaque, le circuit d'attaque est connecté à l'électrode de commande (21), et le circuit d'attaque est conçu pour exciter les cristaux liquides de type invité-hôte afin de les dévier de manière à régler une ouverture.

2. Module d'affichage (100) selon la revendication 1, dans lequel une zone de projection orthographique de la région de réglage d'ouverture (31) sur le substrat (30) est supérieure ou égale à une zone de projection orthographique du premier trou de transmission de lumière (11) dans le substrat (30).

3. Module d'affichage (100) selon la revendication 1, comprenant en outre :
une paroi de retenue de cristaux liquides (32), dans lequel la paroi de retenue de cristaux liquides (32) est une paroi de retenue annulaire fermée, une région intérieure définie par la paroi de retenue de cristaux liquides (32) est la région de réglage d'ouverture (31), une région à l'extérieur de la paroi de retenue de cristaux liquides (32) est la région d'affichage à cristaux liquides (33), et la région d'affichage à cristaux liquides (33) est séparée de la région de réglage d'ouverture (31) par l'intermédiaire de la paroi de retenue de cristaux liquides (32).

4. Module d'affichage (100) selon la revendication 1, dans lequel l'électrode de commande (21) comprend une pluralité d'électrodes d'ouverture et de fils d'attaque (22) d'électrode espacés les uns des autres, et chacune des électrodes d'ouverture est connectée au circuit d'attaque par l'intermédiaire du fil d'attaque (22) d'électrode correspondant.

5. Module d'affichage (100) selon la revendication 4, dans lequel chacune des électrodes d'ouverture est une électrode en boucle fermée, et la pluralité d'électrodes d'ouverture sont disposées coaxialement.

6. Module d'affichage (100) selon la revendication 4, dans lequel le circuit d'attaque comprend :
une pluralité de colonnes conductrices (342) disposées sur le substrat (30) et espacées de la région de réglage d'ouverture (31), chacun des fils d'attaque (22) d'électrode étant connecté à une colonne conductrice (342) correspondante ; et
une puce pilote d'affichage (341) disposée sur le substrat (30) et à proximité d'un côté de la pluralité de colonnes conductrices (342) faisant face à la région de réglage d'ouverture (31), chacun des fils d'attaque (22) d'électrode étant connecté à la puce pilote d'affichage (341) par l'intermédiaire d'une colonne conductrice (342) correspondante.

7. Dispositif électronique, comprenant :
un module d'affichage (100) selon l'une quelconque des revendications 1-6 ; et
un module appareil photo (200) disposé sur un côté du module d'affichage (100) à proximité d'un module de rétroéclairage (50), une fenêtre de viseur du module appareil photo (200) correspondant à une région de réglage d'ouverture (31) du module d'affichage (100), de manière à prendre une vue en fonction d'une ouverture réglée par la région de réglage d'ouverture (31).

8. Dispositif électronique selon la revendication 7, dans lequel une zone de projection orthographique de la région de réglage d'ouverture (31) sur le module appareil photo (200) est supérieure ou égale à une zone de la fenêtre de viseur du module appareil photo (200).

9. Procédé de commande de prise de vue commandant le dispositif électronique selon l'une quelconque des revendications 7-8, le procédé comprenant :
l'acquisition (S1) d'une instruction de réglage d'ouverture ;
le réglage (S2) d'une région de réglage d'ouverture (31) selon l'instruction de réglage d'ouverture pour obtenir une ouverture cible ; et
la prise de vue (S3) en fonction de l'ouverture cible.

10. Procédé de commande de prise de vue selon la revendication 9, dans lequel le réglage d'une région de réglage d'ouverture (31) selon l'instruction de réglage d'ouverture pour obtenir une ouverture cible comprend :
la détermination d'une région d'ouverture de la région de réglage d'ouverture (31) selon l'instruction de réglage d'ouverture ; et
la commande de la déviation du cristal liquide de type invité-hôte correspondant à la région d'ouverture pour obtenir l'ouverture cible.

11. Procédé de commande de prise de vue selon la revendication 10, dans lequel la commande de la déviation du cristal liquide de type invité-hôte correspondant à la région d'ouverture pour obtenir l'ouverture cible comprend :
l'application d'une tension cible à la région d'ouverture ; et
l'excitation, en fonction de la tension cible, du cristal liquide de type invité-hôte afin de le dévier d'un angle cible pour obtenir l'ouverture cible.

12. Appareil de commande de prise de vue, comprenant le dispositif électronique selon l'une quelconque des revendications 7-8, l'appareil de commande comprenant en outre :
un module d'acquisition, configuré pour acquérir une instruction de réglage d'ouverture ;
un module de réglage, configuré pour régler la région de réglage d'ouverture (31) selon l'instruction de réglage d'ouverture pour obtenir une ouverture cible ; et
un module de prise de vue, connecté au module de réglage et configuré pour prendre une vue en fonction de l'ouverture cible.

13. Appareil de commande de prise de vue selon la revendication 12, dans lequel le module de réglage comprend :
une unité de commande, configurée pour recevoir l'instruction de réglage d'ouverture et déterminer une région d'ouverture de la région de réglage d'ouverture (31) selon l'instruction de réglage d'ouverture ; et
une unité d'attaque, configurée pour provoquer la déviation du cristal liquide de type invité-hôte correspondant à la région d'ouverture pour obtenir l'ouverture cible.
